# FASCICULE DE BREVET EUROPEEN

(11) **EP 0 585 316 B1**
(45) Date de publication et mention de la délivrance du brevet: **13.08.1997**
(21) Numéro de dépôt: 92910932.0
(22) Date de dépôt: 06.05.1992
(51) Int. Cl.: B01D 53/34, B01D 53/70, A62D 3/00

(54) **PROCEDE D'EPURATION DE FUMEES CONTENANT DES POLLUANTS ORGANIQUES CONDENSABLES**
VERFAHREN ZUR REINIGUNG VON KONDENSIERBAREN ORGANISCHEN VERUNREINIGUNGEN ENTHALTENDEN GASEN
METHOD OF CLEANING GASES CONTAINING CONDENSABLE ORGANIC POLLUTANTS

(30) Priorité: 07.05.1991 FR 9105853
(43) Date de publication de la demande: 09.03.1994
(73) Titulaire: LAB S.A., 69003 Lyon (FR)
(72) Inventeur: VICARD, Jean-François, F-69002 Lyon (FR); VICARD, Gilles, F-69005 Lyon (FR)
(74) Mandataire: Monnier, Guy
(86) Numéro de dépôt international: FR9200408
(87) Numéro de publication internationale: WO9219364

(56) Documents cités:
- EP-A- 0 208 490
- EP-A- 0 357 960
- EP-A- 0 381 601
- DE-A- 3 224 350
- DE-C- 3 841 858
- FR-A- 2 374 070
- US-A- 4 699 667

## Description

### DOMAINE DE L'INVENTION

La présente invention se réfère aux procédés d'épuration par voie humide des fumées contenant des polluants condensables en particulier des polluants organiques.

### ETAT DE L'ART

Par exemple dans le cas des fumées d'incinération d'ordures ménagères, on peut mesurer sur les incinérations les plus modernes après récupération d'énergie c'est-à-dire à une température d'environ 180 à 250°C des teneurs en polluants organiques gazeux se situant le plus souvent dans la plage 1 à 10 mg/m³ (mesure du carbone organique total par la méthode par ion;sation de flamme). Parmi ces polluants organiques certains composés font l'objet d'investigations particulières en raison de leur toxicité propre : c'est le cas des polychlorodibenzo-p-dioxines (PCDD) et polychlorodibenzofurances (PCDF) pour lesquels il est nécessaire d'atteindre des teneurs très basses.

Pour capter ces polluants, plusieurs techniques ont été proposées. La première technique consiste à injecter dans les fumées une poudre de charbon actif, à assurer un temps de contact suffisant entre la poudre et les fumées puis à séparer cette poudre de charbon actif comme les cendres volantes, dans un électrofiltre ou dans un filtre à manche. Cette méthode peut être utilement combinée avec une épuration semi-sèche ou une épuration sèche ; dans ce dernier cas on peut mélanger la poudre de charbon actif avec la poudre de chaux éteinte avant injection dans les fumées. Cette première technique est toutefois limitée dans son application par plusieurs facteurs ; la température des fumées doit rester assez élevée pour éviter le colmatage et la corrosion par condensation, ce qui limite les possibilités d'absoption ; la présence d'autres polluants consomme le potentiel d'absorption de la poudre de charbon actif ; et enfin le mélange de la poudre de charbon actif avec les cendres volantes limite la quantité maximum de poudre de charbon actif qui peut être injectée.

Pour éviter les inconvénients et limitations de cette première technique une deuxième technique a été proposée. Elle consiste à épurer les fumées tout d'abord jusqu'à des valeurs très basses pour les principaux polluants particulaires et gazeux puis à faire passer les fumées dans un filtre comportant plusieurs couches de charbon actif en grain. Cette deuxième technique implique la réalisation d'installations complémentaires importantes et est, elle aussi, limitée dans son application par plusieurs facteurs ; la température des fumées ne doit pas être trop élevée en raison des risques d'inflammation de l'importante quantité de charbon actif mise en oeuvre ; il est nécessaire de renouveler le charbon actif assez souvent en raison de la présence d'autres polluants qui sont absorbés et pour limiter les risques d'inflammation ; et enfin le charbon actif doit, après utilisation, être traité en raison de sa composition.

Pour éviter ces inconvénients et limitations une troisième technique a été proposée. Elle consiste à épurer les fumées tout d'abord jusqu'à des valeurs très basses pour les principaux polluants particulaires et gazeux à l'exception des oxydes d'azote puis à faire passer les fumées dans un filtre constitué de catalyseurs identiques à ceux utilisés dans les procédés connus de réduction catalytique sélective des oxydes d'azote ; une injection de gaz NH₃ est faite pour ladite réduction sélective des oxydes d'azote, mais la quantité de catalyseurs est augmentée pour permettre l'absorption et la destruction des dioxines et furanes ; une variante consiste à ajouter des catalyseurs spécifiquement conçus pour la destruction des dioxines et furanes. Cette troisième technique implique la réalisation d'installations complémentaires importantes et est, elle aussi, limitée dans son application par plusieurs facteurs ; la température des fumées doit rester assez élevée pour éviter l'empoisonnement des catalyseurs par condensation de sel restant gazeux si la température est assez élevée ; l'épuration préalable des fumées doit être poussée pour éviter l'empoisonnement des catalyseurs par des éléments spécifiques, arsenic par exemple ; enfin, si cette troisième technique a l'avantage de détruire les dioxines et furanes, il y a un risque de désorption avant destruction sous l'effet de tel ou tel facteur amont plus au moins bien contrôlé.

Il a été aussi proposé d'utiliser des laveurs humides pour la captation des polluants organiques. Après contact avec les fumées, le liquide de lavage est recyclé et une partie, la purge, est traitée dans un réacteur externe le plus souvent par voie biologique, ce qui permet par oxydation biologique de détruire ces polluants organiques (DE-A-3 224 350 et FR-A-2 374 070) et de réutiliser le liquide traité dans le laveur. Mais cette voie est limitée par la complexité et le coût de la régénération biologique qui ne peut être appliquée qu'à une purge aussi limitée que possible.

Par ailleurs les systèmes d'épuration conçus pour la séparation des autres polluants peuvent avoir un rôle - mal contrôlé - par rapport à ces polluants organiques condensables ; dans les systèmes secs et semi sec avec électrofiltre ou filtre à manche, il y a en général par réaction catalytique augmentation de polluants particuliers comme les dioxines et furanes ; dans les systèmes humides, suivant les cas, il peut y avoir augmentation ou diminution, sans toutefois obtenir systématiquement des teneurs résiduelles extrêmement basses.

### SOMMAIRE DE L'INVENTION

La présente invention vise à supprimer ces inconvénients et limitations en concevant de manière judicieuse le procédé d'épuration pour assurer la captation des polluants organiques condensables ainsi que leur destruction (cf. revendication 1).

Pour cela les fumées sont épurées par un procédé humide qui assure suivant l'état de l'art tout d'abord la trempe des fumées qui provoque la condensation des polluants organiques condensables sur les particules de poussière présentes dans les fumées ou sous forme de nouvelles particules fines, puis la captation de toutes ces particules par transfert dans le liquide de lavage. Suivant l'invention, le procédé humide d'épuration est caractérisé par :
- A) l'introduction dans le liquide de lavage d'une phase intermédiaire sous forme de solide finement divisé immobilisant les polluants organiques condensables captés pour éviter leur relargage dans les fumées en attendant l'achèvement de la réaction de destruction suivant B) ci-après.
- B) la mise en oeuvre dans le liquide de lavage lui-même, au niveau de la phase intermédiaire suivant A) ci-dessus de réactions de destruction de polluants organiques condensables (par oxydation par exemple) éventuellement catalysés par la phase intermédiaire suivant A) ci-dessus.

### DESCRIPTION DETAILLEE DE L'INVENTION

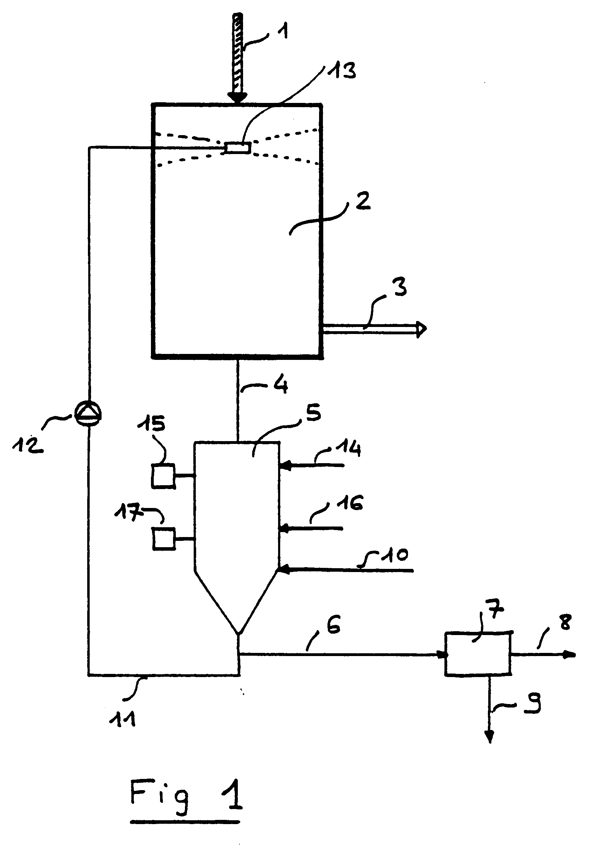

Une meilleure compréhension de l'invention peut être obtenue maintenant grâce à la description détaillée suivante en liaison avec la figure 1 qui donne une représentation schématique du procédé objet de l'invention.

Les fumées à épurer (1) sont épurées par un procédé humide qui assure suivant l'état de l'art la séparation des polluants gazeux et particulaires au niveau d'épuration recherché pour les fumées épurées (3). Un tel procédé humide est mis en oeuvre grâce à un laveur (2) où les fumées sont contactées par le liquide le lavage recyclé (11) envoyé par une pompe (12) dans des pulvérisateurs (13) répartissant ledit liquide de lavage recyclé dans les fumées. Le liquide de lavage recyclé (11) pulvérisé dans le laveur (2), après contact avec les fumées est récupéré (4) dans un bac (5) qui est souvent aménagé dans la base du laveur (2). Une faible partie (6) du liquide de lavage récupéré (4) est dirigée sur une station de traitement (7). Les polluants captés sont précités et séparés sous forme de résidu solide (9) tandis que l'eau claire (8) est rejetée dans le milieu naturel ou recyclée dans le bac (5). Un appoint d'eau (10) compense les consommations en particulier celles dues à l'évaporation dans le laveur (2). En général le contact entre les fumées et le liquide de lavage (10) amène ces fumées à des conditions proches de la saturation en vapeur d'eau : les fumées sont ainsi trempées et généralement leur température devient très rapidement légèrement supérieure à la température humide des fumées à épurer (1). Il en résulte une condensation des polluants organiques condensables sur les particules de poussières présentes dans les fumées (1) ou sous forme de nouvelles particules fines ; le laveur (2) est dimensionné pour assurer la captation de ces particules pour atteindre le niveau d'épuration requis pour les fumées épurées (3). L'expérience montre que les particules captées par transfert dans le liquide de lavage restent dans le liquide lorsqu'il s'agit de polluants minéraux mais que pour de nombreux polluants organiques il y a une tendance au relargage dans les fumées épurées (3), ce relargage étant d'autant plus important que la concentration dans le liquide de lavage est élévée. Or l'obtention d'un niveau d'épuration élevé impose un débit important de liquide de lavage (10) qu'il n'est pas possible pour des raisons techniques et économiques de traiter comme la déconcentration (6). Suivant l'invention, une phase intermédiaire est constituée dans le liquide de lavage recyclé (11) en injectant un corps (14) par exemple dans le bac (5) et capable d'immobiliser les polluants organiques condensables captés. Le corps (14) est un solide finement divisé tel que par exemple du charbon actif en poudre. Pour déterminer la quantité de corps (14) à injecter on évalue (15) la teneur en polluants organiques non immobilisés en mesurant par exemple la teneur en carbone organique totale de la phase liquide. Cette évaluation peut être faite soit périodiquement et on règle manuellement a priori le taux d'injection en prenant une marge de sécurité raisonnable soit en continu et on règle automatiquement le taux d'injection. Toutefois il est aussi nécessaire de détruire les polluants organiques captés et immobilisés si l'on ne veut pas atteindre des consommations excessives du corps (14). A cet effet une réaction de destruction de ces polluants organiques est mise en oeuvre dans le liquide de lavage lui-même, au niveau de la phase intermédiaire en introduisant un réactif (16) pouvant réagir avec les polluants organiques. En général la réaction la plus appropriée est une réaction d'oxydation, par exemple avec de l'eau oxygénée H₂O₂, et qui peut bénéficier d'un effet catalytique de la phase intermédiaire. Pour déterminer la quantité du réactif (16) à injecter on évalue (17) sa teneur réelle dans le liquide ; par exemple dans le cas d'une réaction d'oxydation on mesurera l'oxygène dissous de la phase liquide. Cette évaluation peut être faite soit périodiquement et on règle manuellement à priori le taux d'injection en prenant une marge de sécurité raisonnable soit en continu et on règle automatiquement le taux d'injection. Dans le cas d'une réaction d'oxydation il peut être judicieux au lieu de consommer un réactif comme l'eau oxygénée d'utiliser l'oxygène dissous naturellement dans le liquide de lavage lors de son contact avec les fumées ; l'injection de réactif (16) est alors obtenue par cette dissolution et c'est le débit de liquide de lavage qui est alors réglé pour maintenir l'oxygène dissous réel au niveau requis. De la même manière dans le cas de fumées provenant de processus de combustion, il est possible de faire fonctionner ce processus de manière à ce que la phase intermédiaire soit constituée par les poussières émises et contenues alors dans les fumées (1) en particulier les imbrûlés. Il peut être aussi préférable d'un point de vue pratique d'injecter le corps (14) non pas dans le bac (5) mais dans les fumées à épurer (1), en amont du laveur (2).

Les quantités et natures de polluants organiques condensables variant d'un site d'application à l'autre, il est nécessaire pour chaque site de relier expérimentalement la teneur en polluants organiques condensables dans les fumées épurées (3) aux évaluations (15 et 17).

Un exemple montrera mieux l'intérêt de l'invention. Sur des fumées d'incinération d'ordures ménagères, le procédé objet de l'invention a été mis en oeuvre sur un laveur assurant une épuration très poussée sur les polluants classiques :
- poussières: inférieur à 1 mg/Nm³
- HCl: inférieur à 1 mg/Nm³
- SO₂: inférieur à 20 mg/Nm³

Pour les polluants organiques condensables on s'est intéressé à des polluants spécifiques toxiques, les dioxines et furanes.

En injectant 20 kg/h de poudre de charbon actif ayant une surface spécifique de 1000, on a obtenu :
- un taux de destruction supérieur à 90%
- un rendement de captation (avec oxydation par les fumées) supérieur à 99%
- un rendement de captation (avec oxydation à l'eau oxygénée) supérieur à 99,8%.

## Revendications

1. Procédé d'épuration des fumées contenant des polluants organiques condensables, mettant en oeuvre un procédé d'épuration humide par l'intermédiaire d'un liquide de lavage recyclé, caractérisé en ce qu'on introduit dans le liquide de lavage une phase intermédiaire, sous la forme d'un solide finement divise, pour immobiliser lesdits polluants, et un réactif réagissant, en combinaison avec ladite phase intermédiaire, par une réaction de destruction, avec les polluants organiques captés.

2. Procédé suivant la revendication 1, caractérisé en ce que le solide finement divisé est constitué par une substance à grande surface spécifique, du genre poudre de charbon actif.

3. Procédé suivant la revendication 1, caractérisé en ce que le solide finement divisé est constitué par de la poudre d'un oxyde de la famille oxyde de titane, alumine, oxyde de fer ou silice.

4. Procédé suivant la revendications 1, 2 ou 3, caractérisé en ce que la réaction de destruction est une réaction d'oxydation utilisant l'oxygène dissous prélevé sur les fumées et/ou le peroxyde d'Hydrogène et/ou l'ozone.

5. Procédé suivant l'une quelconque des revendications 1, 2, 3 ou 4, caractérisé en ce que l'on évalue la teneur dans le liquide de lavage en polluants organiques afin de régler l'injection dans ce liquide de lavage permettant d'obtenir la phase intermédiaire.

6. Procédé suivant l'une quelconque des revendications 1, 2, 3, 4 ou 5, caractérisé en ce que l'on évalue la teneur réelle dans le liquide de lavage du réactif utilisé pour mettre en oeuvre la réaction de destruction afin de régler l'injection de ce réactif.

## Claims

1. A process for scrubbing flue gases containing condensable organic pollutants, using a wet scrubbing process by means of a recycled washing liquid, characterised in that an intermediate phase, in the form of a finely divided solid, for immobilising said pollutants, and a reagent reacting, in combination with said intermediate phase, by a destruction reaction with the collected organic pollutants are introduced into the washing liquid.

2. A process according to Claim 1, characterised in that the finely divided solid is formed by a substance of large specific surface area, of the type of activated carbon powder.

3. A process according to Claim 1, characterised in that the finely divided solid is formed by the powder of an oxide from the family consisting of titanium oxide, alumina, iron oxide or silica.

4. A process according to Claims 1, 2 or 3, characterised in that the destruction reaction is an oxidation reaction using the dissolved oxygen taken from the flue gazes and/or hydrogen peroxide or ozone.

5. A process according to any one of Claims 1, 2, 3 or 4, characterised in that the content of organic pollutants in the washing liquid is evaluated in order to control the injection into this washing liquid which makes it possible to obtain the intermediate phase.

6. A process according to any one of Claims 1, 2, 3, 4 or 5, characterised in that the actual content of the reagent used to implement the destruction reaction in the washing liquid is evaluated in order to control the injection of this reagent.

## Patentansprüche

1. Verfahren zur Reinigung von Rauchgasen, die kondensierbare organische Verunreinigungen enthalten, unter Verwendung eines Nassreinigungsverfahrens mit einer Waschflüssigkeit im Kreislauf, **dadurch gekennzeichnet**, dass in die Waschflüssigkeit eine Zwischenstufe in Form eines fein zerteilten Feststoffes einführt wird, um besagte Verunreinigungen zu binden, und ein Reagens, das in Kombination mit besagter Zwischenstufe in einer Abbaureaktion mit den erfassten organischen Verunreinigungen reagiert.

2. Verfahren nach Anspruch 1, **dadurch gekennzeichnet**, dass der fein zerteilte Feststoff aus einer Substanz mit grosser spezifischer Oberfläche in Art von Aktivkohlepuder besteht.

3. Verfahren nach Anspruch 1, **dadurch gekennzeichnet**, dass der fein zerteilte Feststoff aus Puder eines Oxids der Oxid-Familie von Titan, Aluminium, Eisen oder Silicium besteht.

4. Verfahren nach den Ansprüchen 1, 2 oder 3, **dadurch gekennzeichnet**, dass die Abbaureaktion eine Oxidationsreaktion ist, bei der gelöster Sauerstoff entnommen aus den Rauchgasen und/oder Wasserstoffperoxid und/oder Ozon benutzt wird.

5. Verfahren nach einem der Ansprüche 1, 2, 3 oder 4, **dadurch gekennzeichnet**, dass der Gehalt an organischen Verunreinigungen in der Waschflüssigkeit abgeschätzt wird, um die Zugabe in diese Waschflüssigkeit zu regeln und damit Erhalten der Zwischenstufe zu ermöglichen.

6. Verfahren nach einem der Ansprüche 1, 2, 3, 4 oder 5, **dadurch gekennzeichnet**, dass der tatsächliche Gehalt des zur Abbaureaktion benutzten Reagens in der Waschflüssigkeit abgeschätzt wird, um damit die Zugabe dieses Reagens zu regeln.
